(19) Europäisches Patentamt
European Patent Office
Office européen des brevets

(11) **EP 3 021 393 B1**

(12) **EUROPEAN PATENT SPECIFICATION**

(45) Date of publication and mention of the grant of the patent:
**03.04.2019 Bulletin 2019/14**

(51) Int Cl.:
*H01M 8/02* (2016.01)     *H01M 8/12* (2016.01)
*H01M 4/86* (2006.01)     *H01M 4/90* (2006.01)
*H01M 8/1213* (2016.01)   *H01M 8/1246* (2016.01)
*H01M 8/2425* (2016.01)   *H01M 8/124* (2016.01)
*H01M 8/2465* (2016.01)

(21) Application number: **14822374.6**

(22) Date of filing: **27.06.2014**

(86) International application number:
**PCT/JP2014/003438**

(87) International publication number:
**WO 2015/004871 (15.01.2015 Gazette 2015/02)**

(54) **SOLID OXIDE FUEL CELL, MANUFACTURING METHOD THEREFOR, FUEL-CELL STACK, AND SOLID OXIDE FUEL-CELL DEVICE**

FESTOXIDBRENNSTOFFZELLE, HERSTELLUNGSVERFAHREN DAFÜR, BRENNSTOFFZELLENSTAPEL UND FESTOXIDBRENNSTOFFZELLENVORRICHTUNG

PILE À COMBUSTIBLE À OXYDE SOLIDE ET SON PROCÉDÉ DE FABRICATION, ASSEMBLAGE DE PILES À COMBUSTIBLE ET DISPOSITIF À PILE À COMBUSTIBLE À OXYDE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2013 JP 2013145865**
**26.05.2014 JP 2014108364**

(43) Date of publication of application:
**18.05.2016 Bulletin 2016/20**

(73) Proprietor: **NGK Sparkplug Co., Ltd.**
**Nagoya-shi, Aichi 467-8525 (JP)**

(72) Inventors:
• **MATSUNO, Toshihiro**
**Nagoya-shi**
**Aichi 467-8525 (JP)**
• **MURASE, Chisato**
**Nagoya-shi**
**Aichi 467-8525 (JP)**
• **HISANO, Yuko**
**Nagoya-shi**
**Aichi 467-8525 (JP)**
• **YAMAGIWA, Katsuya**
**Nagoya-shi**
**Aichi 467-8525 (JP)**

(74) Representative: **Grünecker Patent- und Rechtsanwälte**
**PartG mbB**
**Leopoldstraße 4**
**80802 München (DE)**

(56) References cited:
EP-A2- 1 528 615        WO-A1-2012/141177
JP-A- 2002 134 132      JP-A- 2005 135 729
JP-A- 2008 226 654      JP-A- 2012 212 541
JP-A- 2012 212 541      JP-A- 2013 012 337
JP-A- 2013 110 115      JP-A- 2013 131 489
US-A1- 2010 266 925

## Description

TECHNICAL FIELD

The present invention relates to a solid oxide fuel cell, to a production method therefor, to a fuel cell stack, and to a solid oxide fuel battery. More particularly, the invention relates to a solid oxide fuel cell which realizes high power generation performance in an initial stage and whose deterioration is suppressed, with a drop in power generation performance being suppressed even after operation for a long period of time; to a method for producing the fuel cell; to a fuel cell stack using the fuel cell, and to a solid oxide fuel battery including the fuel cell stack.

BACKGROUND ART

Hitherto, there have been known solid oxide fuel batteries employing a solid oxide serving as a solid electrolyte. Such a solid oxide fuel battery includes a number of solid oxide fuel cells stacked together, and each fuel cell is composed of, for example, a plate-like solid electrolyte layer, and an anode layer and a cathode layer provided on opposite sides of the solid electrolyte layer. During operation of the solid oxide fuel battery, a fuel gas (e.g., hydrogen gas) is supplied to the anode layer, and air is supplied to the cathode layer. Reaction between the fuel gas and oxygen present in air by the mediation of the solid electrolyte layer generates electric power.

Conventionally, the cathode layer of the solid electrolyte fuel cell is typically made of a material such as an LSM-based material containing La, Sr, and Mn, and an LSC-based material containing La, Sr, and Co, an LSF-based material containing La, Sr, and Fe, or a similar material.

Also, the solid electrolyte layer of the solid electrolyte fuel cell is typically made of a material such as YSZ (yttria-stabilized zirconia).

During operation of a solid electrolyte fuel battery, the temperature of a solid electrolyte fuel cell rises to about 700 to about 1,000°C, and chemical elements diffuse between adjacent layers of the solid electrolyte fuel cell. Particularly, element diffusion occurs from the cathode layer to the solid electrolyte layer, whereby, in some cases, the elements diffused from the cathode layer react with a substance contained in the solid electrolyte layer, to thereby form a high-resistance layer (i.e., a layer having high electrical resistance) between the cathode layer and the solid electrolyte layer. In one known case, Sr diffuses from the cathode layer to the solid electrolyte layer, and the diffused Sr reacts with Zr contained in the solid electrolyte layer, to thereby form a high-resistance layer containing $SrZrO_3$.

Once such a high-resistance layer is formed, the electrical resistance between the cathode layer and the solid electrolyte layer increases, whereby power generation performance of the relevant solid oxide fuel battery decreases.

Patent Document 1 discloses a solid oxide fuel cell having an element diffusion prevention layer for preventing formation of a high-resistance layer between the cathode layer and the solid electrolyte layer.

A characteristic feature of the solid electrolyte fuel cell disclosed in Patent Document 1 resides in that "the fuel cell has a solid electrolyte layer, an oxygen electrode formed on one surface of the solid electrolyte layer by the mediation of an element diffusion prevention layer, and an anode layer formed on the other surface of the solid electrolyte layer, wherein the element diffusion prevention layer is a porous layer which is formed of a complex oxide containing at least one rare earth element and Zr and which has an open porosity of 30% or more" (see Claim 1 in Patent Document 1).

In addition, another characteristic feature of the solid electrolyte fuel cell disclosed in Patent Document 1 resides in that "the element diffusion prevention layer has a thickness of 2 to 10 μm" (see Claim 5 in Patent Document 1).

A fuel cell having an oxygen-side electrode, and a solid electrolyte which is separated from the electrode via an electrode via an intermediate layer is known from US 2010/266925 A1. The intermediate layer contains a first layer which contains the Zr and a second layer which does not contain the Zr. The intermediate layer that contains Zr is between 1 and 10 μm, wherein the intermediate layer that does not contain Zr, is between 5 and 20 μm. Further, fuel cells are described in JP 2002 134132 A, JP 2012 212541 A, and EP 1 528 615 A2.

However, the present inventors have conducted extensive studies and have found that diffusion of Sr in the solid oxide fuel cell disclosed in Patent Document 1 having the aforementioned element diffusion prevention layer is suppressed even after operation for a long period of time. But the inventors have also found that since the element diffusion prevention layer is formed of a GDC-YSZ mutually diffused layer, the electrical resistance of the element diffusion prevention layer is high, resulting in poor power generation performance of the solid oxide fuel cell in an initial stage.

PRIOR ART DOCUMENT

PATENT DOCUMENT

Patent Document 1: Japanese Patent Application Laid-Open (kokai) No. 2004-303455

## SUMMARY OF THE INVENTION

## PROBLEMS TO BE SOLVED BY THE INVENTION

An object of the present invention is to provide a solid oxide fuel cell, which realizes high power generation performance in an initial stage, with a drop in power generation performance being suppressed even after operation for a long period of time, through prevention of formation of a high-resistance region between a cathode layer and a solid electrolyte layer and such a high-resistance region in layer form. Another object is to provide a method of producing the fuel cell, a fuel cell stack using the fuel cell, and a solid oxide fuel battery including the fuel cell stack.

## MEANS FOR SOLVING THE PROBLEMS

Means for solving the aforementioned problems are as follows.
For solving the problem, the present invention provides a solid oxide fuel cell having the features defined in claim 1. Further preferred embodiments are defined in dependent claims 1 to 5. Further, a method for producing the inventive solid oxide fuel cell is provided. The method may have the features defined in any one of claims 6 to 9. Further, a fuel cell stack in accordance with claim 10 and a solid oxide fuel battery in accordance with claim 11 is provided.

## EFFECTS OF THE INVENTION

(1) In the solid oxide fuel cell of the present invention, the element diffusion prevention layer has a specific thickness, and a percent Sr coverage of 90% or less, even after the accelerated heating test at 1,000°C for 100 hr. When the solid oxide fuel cell is subjected to the accelerated heating test, it is possible to simulate the state of the solid oxide fuel cell after long-term operation of the solid oxide fuel battery having the cell.
In the case of the solid oxide fuel cell of the present invention, even after the accelerated heating test; i.e., even in a state where long-term operation of the solid oxide fuel battery is simulated, 10% or more of the element diffusion prevention layer is not covered with Sr and includes no high-resistance region. Thus, even after long-term operation of the solid oxide fuel battery having the solid oxide fuel cell of the present invention, formation of a high-resistance layer between the solid electrolyte layer and the cathode layer is prevented, although high-resistance regions are locally present therebetween. As a result, conduction paths are secured between the solid electrolyte layer and the cathode layer, whereby a drop in power generation performance of the fuel battery can be prevented. Furthermore, when the intermediate layer is designed such that the thickness of the element diffusion prevention layer after the accelerated heating test falls within a range of 600 nm or more to 2,000 nm or less, the initial power generation performance of the solid oxide fuel cell, fuel cell stack, and solid oxide fuel battery can be enhanced, and a drop in power generation performance after long-term operation can be suppressed.
(2) In the case where the element diffusion prevention layer has an average particle diameter of 0.5 $\mu$m or more, the particle diameter of the grains constituting the element diffusion prevention layer is large. In this case, during power generation, chemical elements diffuse while detouring around the grains, whereby rapid and straight diffusion of the elements in the element diffusion prevention layer can be impeded. Thus, reaction between Sr and chemical elements contained in the element diffusion prevention layer is suppressed, whereby the percent Sr coverage of the element diffusion prevention layer can be suppressed to a low level. Also, when the element diffusion prevention layer has an average particle diameter of 0.71 $\mu$m or less, the thickness of the element diffusion prevention layer having high electrical resistance can be reduced, whereby a solid oxide fuel cell exhibiting excellent initial power generation performance can be provided.
(3) Since the element diffusion prevention layer contains Ce and/or Gd as a rare earth element, the Zr content of the element diffusion prevention layer is relatively small. As a result, the percent Sr coverage of the element diffusion prevention layer is suppressed to 90% or less, even when the solid oxide fuel cell is exposed to high temperature for a long period of time. That is, Sr reacts with Zr contained in the element diffusion prevention layer, to thereby form a high-resistance region, resulting in a drop in power generation performance of the solid oxide fuel cell. In order to overcome such a drawback, the Zr content of the element diffusion prevention layer is reduced so that Zr is sparsely present in the element diffusion prevention layer. As a result, the percent Sr coverage, which is an index representing the degree of occupation of a high-resistance region(s), can be suppressed to 90% or less.
(4) When the element diffusion prevention layer is disposed at the interface between the solid electrolyte layer and the intermediate layer, formation of a high-resistance layer at the interface between the solid electrolyte layer and the cathode layer can be effectively prevented, which high-resistance layer would otherwise be formed when chemical elements diffusing from the cathode layer reach the solid electrolyte layer.

(5) Since the element diffusion prevention layer has a Ce/Zr mole ratio falling with the aforementioned range, the Zr content of the element diffusion prevention layer is relatively small. As a result, the percent Sr coverage of the element diffusion prevention layer is suppressed to 90% or less, even when the solid oxide fuel cell is exposed to high temperature for a long period of time. That is, Sr reacts with Zr contained in the element diffusion prevention layer, to thereby form a high-resistance region, resulting in a drop in power generation performance of the solid oxide fuel cell. In order to overcome such a drawback, the Zr content of the element diffusion prevention layer is reduced so that Zr is sparsely present in the element diffusion prevention layer. As a result, the percent Sr coverage, which is an index representing the degree of occupation of a high-resistance region(s), can be suppressed to 90% or less. In addition, Sr from the cathode layer can be effectively trapped by Zr contained in the element diffusion prevention layer, and the electrical conductivity of the element diffusion prevention layer can be increased by GDC.

(6) Since the Zr mole ratio is high on the solid electrolyte side in the element diffusion prevention layer, it is possible to effectively prevent formation of a high-resistance layer at the interface between the solid electrolyte layer and the cathode layer, which high-resistance layer would otherwise be formed when chemical elements diffusing from the cathode layer reach the solid electrolyte layer. Since the Ce mole ratio is high on the cathode side in the element diffusion prevention layer, it is possible to increase the electrical conductivity of the element diffusion prevention layer in the vicinity of the cathode layer.

(7) According to the method of the present invention for producing a solid oxide fuel cell, the element diffusion prevention layer can be formed during firing of the intermediate layer precursor. Thus, a solid oxide fuel cell having an element diffusion prevention layer can be obtained without increasing the number of times of firing operation.

(8) According to the method of the present invention for producing a solid oxide fuel cell, the element diffusion prevention layer can be produced by firing an intermediate layer precursor at a firing temperature lower than that of the solid electrolyte layer precursor. Thus, the solid oxide fuel cell having an element diffusion prevention layer can also be produced by a process in which a laminate of solid electrolyte layer precursor and an anode layer precursor is fired, an intermediate layer precursor and a cathode layer precursor are provided on the fired laminate, and the resultant laminate is fired at relatively low temperature.

(9) According to the method of the present invention for producing a solid oxide fuel cell, during firing, as a result of diffusion of Zr from the solid electrolyte layer or the solid electrolyte layer precursor to the intermediate layer precursor, an element diffusion prevention layer is formed as a part of the intermediate layer. Thus, even when the intermediate layer precursor contains no Zr, an element diffusion prevention layer containing Zr can be formed.

(10) When the firing temperature of the intermediate layer precursor is 1,180°C or more to 1,400°C or less, the thickness of the element diffusion prevention layer can be controlled to a desired thickness during firing of the Zr-containing solid electrolyte layer or the solid electrolyte layer precursor with the intermediate layer precursor.

(11) In the fuel cell stack of the present invention, it is possible to prevent formation of a high-resistance layer at the interface between the solid electrolyte layer and the cathode layer of each of the fuel cells forming the cell stack, even after long-term operation of the cell stack. As a result, a drop in power generation performance of the battery made of the cell stack can be suppressed.

(12) In the solid oxide fuel battery of the present invention, it is possible to prevent formation of a high-resistance layer at the interface between the solid electrolyte layer and the cathode layer of each of the fuel cells forming the cell stack, even after long-term operation of the battery. As a result, a drop in power generation performance of the battery made of the cell stack can be suppressed.

BRIEF DESCRIPTION OF THE DRAWINGS

FIG. 1 is a vertical sectional view a solid oxide fuel cell which is an embodiment of the present invention.

FIG. 2 is a perspective view of a fuel cell stack which is an embodiment of the present invention.

FIG. 3 is a cross-sectional view taken along the line A-A of FIG. 2.

FIG. 4 is a vertical sectional of a solid oxide fuel cell, showing determination of percent Sr coverage.

FIG. 5 is a graph showing the relationship between the firing temperature for producing an intermediate layer and the thickness of an element diffusion prevention layer after an accelerated heating test (Exs. 1 to 10).

FIG. 6 is a graph showing the relationship between the thickness of the element diffusion prevention layer and the percent Sr coverage, after the accelerated heating test (Exs. 1 to 10).

FIG. 7 is a graph showing the relationship between the thickness of the element diffusion prevention layer after the accelerated heating test and the average particle diameter of the element diffusion prevention layer after the accelerated heating test (Exs. 1 to 10).

FIG. 8 is a graph showing the relationship between the average particle diameter of the element diffusion prevention layer and the percent Sr coverage after the accelerated heating test (Exs. 1 to 10).

FIG. 9 is a graph showing the relationship between the percent Sr coverage and the percent deterioration (Exs. 1 to 10).

FIG. 10 is a graph showing the relationship between the firing temperature for producing an intermediate layer and the initial cell IR resistance (Exs. 1 to 10).

FIG. 11 is electron micrographic images of a solid electrolyte layer, a cathode layer, and an intermediate layer, after the accelerated heating test, wherein FIG. 11(a) is an image of Example 8, and FIG. 11(b) is an image of Example 7.

MODES FOR CARRYING OUT THE INVENTION

With reference to the attached drawings, the present invention will next be described in detail.

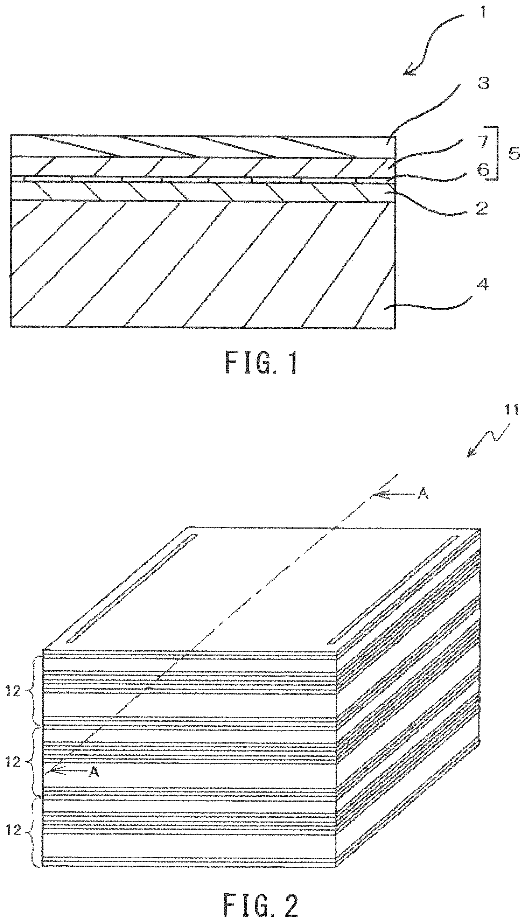

FIG. 1 shows a solid oxide fuel cell which is an embodiment of the present invention. As shown in FIG. 1, a solid oxide fuel cell 1 has a solid electrolyte layer 2, a cathode layer 3 formed on one surface of the solid electrolyte layer 2, and an anode layer 4 formed on the other surface of the solid electrolyte layer 2. An intermediate layer 5 is formed between the solid electrolyte layer 2 and the cathode layer 3, and at least a part of the intermediate layer 5 is an element diffusion prevention layer 6.

During operation of a relevant solid oxide fuel battery, the solid electrolyte layer 2 transfer ions generated in the cathode layer 3 to the anode layer 4. Suitable ions which move through the solid electrolyte layer 2 are, for example, oxygen ions.

The solid electrolyte layer 2 contains an electrolyte material. The electrolyte material preferably contains Zr. Examples of Zr-containing materials which may be used in the invention include zirconia material, ceria material, and perovskite material. Of these, use of zirconia material is particularly preferred. Examples of the zirconia material which may be used in the invention include yttria-stabilized zirconia (YSZ), scandia-stabilized zirconia (ScSZ), and calcia-stabilized zirconia (CaSZ). Of these, use of yttria-stabilized zirconia (YSZ) is preferred.

The solid electrolyte layer 2 preferably has a thickness of 3 to 20 $\mu$m. When the thickness is smaller than 3 $\mu$m, difficulty is encountered in high-reproducibility production of the solid oxide fuel cell 1 having no defect. When the thickness is in excess of 20 $\mu$m, in some cases, the electrical resistance of the solid electrolyte layer 2 increases, to thereby impair power generation performance of the solid oxide fuel battery.

Preferably, the solid electrolyte layer 2 is formed of a dense material, from the viewpoint of prevention of gas permeation. For example, the solid electrolyte layer 2 is preferably formed of a dense material; i.e., has a relative density, as determined through the Archimedian method, of 95% or more.

The cathode layer 3 serves as the cathode of the battery. In the cathode layer 3, molecules of an oxidant gas supplied from the outside capture electrons, resulting in generation of anions. Generally, the oxidant gas is oxygen. When the oxygen molecules in the cathode layer 3 receive electrons, oxygen ions are generated. The electrons received by the oxidant gas molecules originate from the fuel gas molecules in the anode layer 4 and flow via an external circuit to the cathode layer 3. Anions generated in the cathode layer 3 move through the solid electrolyte layer 2 to the anode layer 4.

The cathode layer 3 contains Sr. No particular limitation is imposed on the Sr source compound for the cathode layer 3. Examples of the compound include Sr-containing perovskite oxides such as $La_{1-x}Sr_xCoO_3$, $La_{1-x}Sr_xFeO_3$, $La_{1-x}Sr_xCo_{1-y}Fe_yO_3$, $La_{1-x}Sr_xMnO_3$, and $Sm_{1-x}Sr_xCoO_3$. As the material to be incorporated into the cathode layer 3, a complex compound of $La_{1-x}Sr_xCo_{1-y}Fe_yO_3$ is particularly preferably used.

Under high-temperature conditions such as those under which the fuel battery is operated, metallic elements contained in the cathode layer 3 (hereinafter may be referred to as "diffusion elements") diffuse toward the solid electrolyte layer 2. Such diffusion elements react with the electrolyte material in the solid electrolyte layer 2; e.g., YSZ, to thereby possibly form a high-resistance region having high electrical resistance. Examples of such diffusion elements include Sr and La.

The cathode layer 3 realizes permeation of the oxidant gas and thus preferably has an open porosity of 20% or more, particularly preferably 30 to 50%.

Also, the cathode layer 3 preferably has a thickness of 30 to 100 $\mu$m.

The intermediate layer 5, which is disposed between the solid electrolyte layer 2 and the cathode layer 3, can transfer anions generated in the cathode layer 3; e.g., oxygen ions, to the solid electrolyte layer 2. The intermediate layer 5 preferably has a thickness of 2 $\mu$m or more to 10 $\mu$m or less. When the thickness of the intermediate layer 5 satisfies the above conditions, excellent power generation performance of the solid oxide fuel cell can be attained in an initial stage thereof, and percent Sr coverage can be suppressed. In addition, the thickness of the intermediate layer 5 remains constant before and after the below-described accelerated heating test. Therefore, even after the solid oxide fuel cell 1 of the present invention has been subjected to the accelerated heating test, the thickness of the intermediate layer 5 is preferably 2 $\mu$m or more to 10 $\mu$m or less. In the intermediate layer 5, a layer portion containing Zr serves as the element diffusion prevention layer 6, while the other layer portion containing no Zr in the intermediate layer 5 serves as a Zr-free layer 7. The Zr-free layer 7 is resistive to reaction with diffusion elements such as Sr, which diffuses from the cathode layer 3 to the solid electrolyte layer 2 under high-temperature conditions. Thus, formation of a high-resistance region can be prevented. When the intermediate layer 5 is maintained under high-temperature conditions (e.g., 700°C or more), Zr contained in the solid electrolyte layer 2 or Zr contained in the element diffusion prevention layer 6 moves to the Zr-free layer 7. In this case, the Zr-free layer 7 is converted to the element diffusion prevention layer 6.

The intermediate layer 5 includes, as a part thereof, the element diffusion prevention layer 6. The element diffusion prevention layer 6 transfers anions generated in the cathode layer 3 (e.g., oxygen ions) to the solid electrolyte layer 2. The intermediate layer 5 transfers elements diffused from the cathode layer 3 to the solid electrolyte layer 2, to thereby form a high-resistance layer between the solid electrolyte layer 2 and the cathode layer 3.

The element diffusion prevention layer 6 is formed of a complex oxide containing at least one rare earth element and Zr. The rare earth element is preferably at least one of Ce and Gd. Zr contained in the element diffusion prevention layer 6 reacts with diffusion elements, to thereby form a high-resistance region in the element diffusion prevention layer 6. As a result, the diffusion elements are prevented from reaching the solid electrolyte layer 2. When Sr is a diffusion element, Sr reacts with Zr, to thereby form $SrZrO_3$ in the element diffusion prevention layer 6. Since the thus-formed $SrZrO_3$ remains in the element diffusion prevention layer 6, it is possible to prevent transfer of Sr serving as a diffusion element to the solid electrolyte layer 2.

During a firing step for producing the solid oxide fuel cell 1, operation of a solid oxide fuel battery, or in a high-temperature accelerated heating test (in air, at 1,000°C, for 100 hr), Zr diffuses in the solid electrolyte layer 2 or the element diffusion prevention layer 6. In this case, a part of the intermediate layer 5 is converted to the element diffusion prevention layer 6.

The element diffusion prevention layer 6 is more preferably formed of YSZ and GDC (gadolinium-doped ceria). The YSZ content and the GDC content of the element diffusion prevention layer 6 are preferably determined, such that the ratio by mole of Ce to Zr of the element diffusion prevention layer 6 falls within a range of 0.6 : 1 or more to 1 : 0.15 or less. In other words, the YSZ content and the GDC content of the element diffusion prevention layer 6 are preferably determined, such that the ratio by mole of Ce contained in the element diffusion prevention layer 6 to Zr contained in the same layer (Ce/Zr mole ratio) falls within a range of 0.6/1 or more to 1/0.15 or less.

When the Ce/Zr mole ratio is less than 0.6/1, the ratio of a high-resistance layer in the element diffusion prevention layer 6 increases, whereby characteristics of the fuel battery may be impaired, whereas when the Ce/Zr mole ratio is in excess of 1/0.15, trapping of Sr by the element diffusion prevention layer 6 may be incomplete, resulting in transfer of diffusion elements to the solid electrolyte layer 2, thereby possibly forming a high-resistance layer.

The Ce/Zr mole ratio may be determined through the following procedure. Firstly, fluorescence attributed to YSZ or GDC is observed in a cross-section of the element diffusion prevention layer 6 under a transmission electron microscope, to thereby determine, in the cross-section, the ratio by mass of Zr contained in YSZ to Ce contained in GDC. The mass ratio is converted to the corresponding ratio by mole.

The Ce/Zr mole ratio of the element diffusion prevention layer 6 may be uniform over an arbitrary region of the element diffusion prevention layer 6, or may vary in different regions of the element diffusion prevention layer 6.

In one case where the Ce/Zr mole ratio varies in different regions of the element diffusion prevention layer 6, the Ce/Zr composition is graded such that the Zr mole ratio is higher on the solid electrolyte layer 2 side of the element diffusion prevention layer 6, and the Ce mole ratio is higher on the cathode layer 3 side of the element diffusion prevention layer 6.

No particular limitation is imposed on the site where the element diffusion prevention layer 6 is provided, so long as the layer 6 is a part of the intermediate layer 5. However, the element diffusion prevention layer 6 is preferably disposed at the interface between the intermediate layer 5 and the solid electrolyte layer 2. Although it is sufficient that the element diffusion prevention layer 6 is disposed to extend over a part of the interface between the intermediate layer 5 and the solid electrolyte layer 2, it is more preferred that the element diffusion prevention layer 6 be disposed to extend over the entire interface. The thickness of the element diffusion prevention layer 6, as measured in a vertical section, may be uniform or varied with position. In the embodiment shown in FIG. 1, the element diffusion prevention layer 6 having a uniform thickness is formed to extend over the entire interface between the intermediate layer 5 and the solid electrolyte layer 2.

After the solid oxide fuel cell 1 has been subjected to an accelerated heating test in air at 1,000°C for 100 hr, the thickness of the element diffusion prevention layer 6 is 600 nm or more to 2,000 nm or less.

The thickness of the element diffusion prevention layer 6 formed in the intermediate layer 5, as measured in the vertical section, may be uniform over an arbitrary region of the element diffusion prevention layer 6, or may differ among regions of the element diffusion prevention layer 6. In one case where the thickness differs among regions of the element diffusion prevention layer 6, it is sufficient that the maximum value of the thickness as measured in the vertical section is 2,000 nm or less, and the minimum value of the thickness is 600 nm or more. When the thickness of the element diffusion prevention layer 6 after the accelerated heating test is less than 600 nm, the aforementioned percent coverage of the element diffusion prevention layer 6 exceeds 90% due to reaction with diffusion elements, after high-temperature treatment for a long period of time. When the thickness of the element diffusion prevention layer 6 after the accelerated heating test is in excess of 2,000 nm, the electrical resistance of the element diffusion prevention layer 6 increases. In order to reduce the electrical resistance of the element diffusion prevention layer 6, the thickness of the element diffusion prevention layer 6, measured after the accelerated heating test, is preferably 1,800 nm or less.

When the solid oxide fuel cell 1 is subjected to an accelerated heating test in air at 1,000°C for 100 hr, it is possible to simulate the state of the solid oxide fuel cell 1 after long-term operation of the solid oxide fuel battery having the cell. The solid oxide fuel cell 1 to be subjected to the accelerated heating test may be an as-produced one or a cell which has been used for a specific period of time. According to the solid oxide fuel cell 1 of the present invention, the element diffusion prevention layer 6 has an Sr-non-covered region at least at a specific ratio, even after the accelerated heating test. Thus, the interface between the solid electrolyte layer 2 and the cathode layer 3 is not covered with a high-resistance layer, which would otherwise be formed by reaction with diffusion elements. As a result, it is possible to prevent a considerable drop in power generation performance of the solid oxide fuel battery, even after a long-term accelerated heating test.

The percent Sr coverage is an index representing the degree of occupation of an Sr-containing high-electrical-resistance region(s) in the element diffusion prevention layer 6. Sr contained in the element diffusion prevention layer 6 diffuses from the cathode layer 3 and reacts with a substance contained in the element diffusion prevention layer 6, to thereby form a high-resistance substance (e.g., $SrZrO_3$) in the element diffusion prevention layer 6. As a result, a high-resistance region(s) is formed. The greater the percent Sr coverage, the greater the ratio of the high-resistance region(s) in the element diffusion prevention layer 6. Thus, electrical resistance of the element diffusion prevention layer 6 increases.

As a result of the accelerated heating test, a diffusion element other than Sr; for example, La, diffuses from the cathode layer 3 to the solid electrolyte layer 2, in a manner similar to Sr. Also, the diffusion element other than Sr reacts with a substance contained in the element diffusion prevention layer 6, to thereby form a high-electrical-resistance substance remaining in the element diffusion prevention layer 6. Thus, through determining the percent Sr coverage, it is possible to estimate the relative amounts of diffusion elements other than Sr, which elements remain in the element diffusion prevention layer 6.

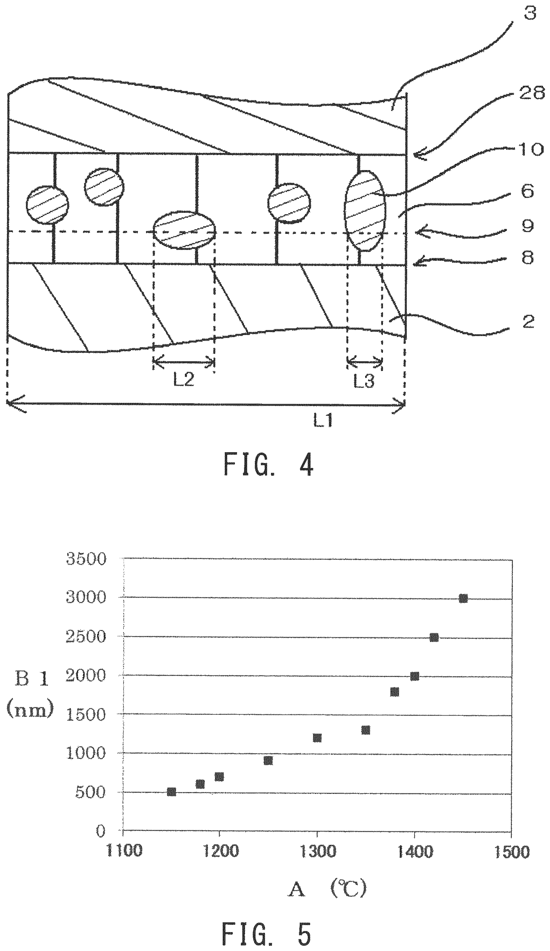

The percent Sr coverage can be determined by observing the element diffusion prevention layer 6 under a transmission electron microscope, to carry out Sr mapping. Specifically, in a vertical section of the solid oxide fuel cell 1, a straight line 9 is drawn parallel to the interface 8 between the solid electrolyte layer 2 and the intermediate layer 5. The percent Sr coverage is a ratio of the total length of Sr-present portions of the parallel straight line 9 to the full length of the parallel straight line 9. The full length of the parallel straight line 9 is set to 3 to 4 $\mu$m. A plurality of parallel straight lines 9 are drawn, at constant intervals of 200 nm, from the interface 8 between the solid electrolyte layer 2 and the intermediate layer 5 to the interface 28 between the intermediate layer 5 and the cathode layer 3. For example, FIG. 4 shows a state in which one straight line 9 is drawn parallel to the interface 8 between the solid electrolyte layer 2 and the intermediate layer 5. The full length of the parallel straight line 9 is denoted by L1, and the total length of Sr-present sections of the parallel straight line 9 is denoted by (L2 + L3). Thus, percent Sr coverage is calculated from the relationship: (L2 + L3)/L1$\times$100. In the case where the parallel straight line 9 passes through a pore(s), the length of the line excluding a section(s) corresponding to the pore(s) is employed as L1. For example, when 10% of the parallel straight line 9 is the section(s) corresponding to the pore(s), and thus 90% of the line is an Sr-covered section, the percent Sr coverage is 100%.

It is preferred that the average particle diameter of the element diffusion prevention layer 6 be 0.5 $\mu$m or more to 0.71 $\mu$m or less, as measured after the solid oxide fuel cell 1 has been subjected to an accelerated heating test in air at 1,000°C for 100 hr. The average particle diameter of the element diffusion prevention layer 6 is determined by averaging the sizes of the grains of the complex oxide containing at least one rare earth element and Zr and the sizes of $SrZrO_3$ grains formed in the element diffusion prevention layer 6 layer via reaction with Sr, the grains being contained in the element diffusion prevention layer 6. Similar to the percent Sr coverage, the average particle diameter of the element diffusion prevention layer 6 may be determined through use of an image obtained by observing the element diffusion prevention layer 6 under a transmission electron microscope. Specifically, in a vertical section of the solid electrolyte fuel cell 1, a straight line is drawn in the element diffusion prevention layer 6 parallel to the interface 8 between the solid electrolyte layer 2 and the intermediate layer 5. The lengths of grains which are present in the element diffusion prevention layer 6 and which cross the straight line are determined, and these measurements are averaged. The method for determining the average particle diameter will be described in more detail in the Examples below.

Next, the production method of the present invention for the solid oxide fuel cell 1 will be described.

(1) Preparation of solid electrolyte layer precursor and anode layer precursor

Firstly, a solid electrolyte layer precursor and an anode layer precursor are prepared from a powder containing the components forming the solid electrolyte layer 2 and a powder containing the components forming the anode layer 4. Through firing the solid electrolyte layer precursor and the anode layer precursor, the solid electrolyte layer 2 and the anode layer 4 are formed, respectively. Next will be described one embodiment of the method of preparing the solid electrolyte layer precursor and the anode layer precursor.

Specifically, the components forming the solid electrolyte layer 2 are mixed, to form a powder, and the powder is mixed by means of a ball mill for sufficient dispersion of the components. The thus-obtained powder is mixed with a resin dissolved in a solvent, to thereby form a slurry. Butyral resin may be used as the resin, and a toluene-ethanol mixture may be used as the solvent. The thus-obtained slurry is molded through a known molding technique such as press molding or sheet molding, to thereby form a green sheet, which is an example of the solid electrolyte layer precursor (hereinafter may be referred to as "green sheet A"). Among molding techniques, sheet molding is particularly preferably employed. In one specific procedure, the slurry is applied onto a substrate (e.g., PET film) through doctor blade technique, and then the solvent contained in the slurry is evaporated. Through the aforementioned procedures, uniform samples can be readily prepared.

An example of the anode layer precursor (hereinafter may be referred to as "green sheet B") may be prepared from a powder containing the relevant components in a manner similar to that employed in preparation of green sheet A.

(2) Preparation of Zr-containing intermediate layer precursor

A Zr-containing intermediate layer precursor is prepared from a powder containing Zr. Through firing the Zr-containing intermediate layer precursor, a Zr-containing element diffusion prevention layer 6 can be formed. Next will be described one embodiment of the method of preparing the Zr-containing intermediate layer precursor.

A slurry, which is an example of the Zr-containing intermediate layer precursor (hereinafter may be referred to as "slurry C") may be prepared by mixing materials for forming a Zr-containing element diffusion prevention layer included in the intermediate layer; for example, a mixture of a rare earth element oxide powder and $ZrO_2$ powder, with an organic binder containing a thermoplastic resin (e.g., acrylic resin or polyvinyl alcohol) and a solvent (e.g., isopropyl alcohol).

(3) Preparation of Zr-free intermediate layer precursor

A Zr-free intermediate layer precursor is prepared from a powder containing no Zr. Through firing the Zr-free intermediate layer precursor, a portion of the intermediate layer containing Zr diffused during firing serves as the element diffusion prevention layer 6, and the other portion serve as a Zr-free layer 7. Next will be described one embodiment of the method of preparing the Zr-free intermediate layer precursor.

A slurry, which is an example of the Zr-free intermediate layer precursor (hereinafter may be referred to as "slurry D") may be prepared by mixing materials for forming a Zr-free element diffusion prevention layer; for example, a mixture of a rare earth element oxide powder, with an organic binder containing a thermoplastic resin (e.g., acrylic resin or polyvinyl alcohol) and a solvent (e.g., isopropyl alcohol).

(4) Formation of element diffusion prevention layer

In one embodiment of the method for forming the element diffusion prevention layer 6, the solid electrolyte layer precursor and the Zr-containing intermediate layer precursor are fired simultaneously. The Zr-containing intermediate layer precursor is fired, to thereby form the element diffusion prevention layer 6. Next will be described a specific embodiment.

Specifically, green sheet B is pressed to be stacked on green sheet A, and slurry C is applied on the surface of green sheet A. Through firing the stacked body, green sheet A is converted to the solid electrolyte layer, green sheet B the anode layer, and slurry C the element diffusion prevention layer. In this technique, the element diffusion prevention layer, the solid electrolyte layer, and the anode layer are stacked in this order, and the element diffusion prevention layer serves as the intermediate layer.

In another embodiment for forming the element diffusion prevention layer 6, the solid electrolyte layer precursor, the Zr-containing intermediate layer precursor, and the Zr-free intermediate layer precursor are fired simultaneously. The Zr-containing intermediate layer precursor is fired, to thereby form the element diffusion prevention layer 6. Through firing, a portion of the Zr-free intermediate layer precursor where Zr has diffused also forms the element diffusion prevention layer 6, whereas a portion of the Zr-free intermediate layer precursor where Zr has not diffused serves as the Zr-free layer 7. Next will be described a specific embodiment.

Specifically, green sheet B is pressed to be stacked on green sheet A, and slurries C and D are applied in this order on the surface of the green sheet A stacked body. Through firing the stacked body, green sheet A (i.e., the solid electrolyte layer precursor) and slurry C (i.e., the Zr-containing intermediate layer precursor) are fired simultaneously, whereby the Zr-containing intermediate layer precursor is converted to the element diffusion prevention layer. During this firing step, Zr contained in slurry C diffuses to slurry D, whereby a portion of slurry D contains Zr. Thus, after firing, the element diffusion prevention layer is also formed from the portion of slurry D.

The element diffusion prevention layer 6 may be formed by firing the intermediate layer precursor at a temperature lower than the firing temperature of the solid electrolyte layer precursor. Next will be described an embodiment of the method.

Specifically, green sheet B is pressed to be stacked on green sheet A, and the stacked body is fired at 1,400°C, to thereby produce a preliminary stacked body formed of the solid electrolyte layer 2 and the anode layer 4. An intermediate layer precursor is applied onto the preliminary stacked body, and the resultant stacked body is fired at 1,180°C to 1,400°C, to thereby form the intermediate layer 5.

The higher the firing temperature, the easier the diffusion of Zr contained in the intermediate layer precursor and the solid electrolyte layer precursor. Therefore, when the intermediate layer precursor is fired at a temperature lower than the firing temperature of the solid electrolyte layer precursor, diffusion of Zr can be suppressed, as compared with the case where the solid electrolyte layer precursor and the intermediate layer precursor are fired simultaneously, and the relative amount of the element diffusion prevention layer 6 included in the intermediate layer 5 can be reduced.

When the Zr-containing solid electrolyte layer or the solid electrolyte layer precursor, and the Zr-free intermediate layer precursor are fired, Zr diffuses from the solid electrolyte toward the intermediate layer, whereby the element diffusion prevention layer is formed from at least a part of the intermediate layer precursor. In other words, diffusion of Zr contained in the solid electrolyte layer or the solid electrolyte layer precursor to the intermediate layer precursor leads to formation of the diffusion prevention layer from at least a part of the intermediate layer precursor.

An embodiment of firing the Zr-containing solid electrolyte layer and the Zr-free intermediate layer precursor is as follows. Firstly, Zr is incorporated into a powder containing the components for forming the solid electrolyte layer, to thereby prepare green sheet A. Green sheet B is pressed to be stacked on green sheet A, and the resultant stacked body is fired at 1,400°C, to thereby produce a preliminary stacked body formed of the Zr-containing solid electrolyte layer 2 and the anode layer 4. Surry D is applied onto the solid electrolyte layer 2 of the preliminary stacked body, and the resultant stacked body is fired at 1,180°C to 1,400°C, to thereby diffuse Zr contained in the solid electrolyte layer 2 to slurry D. After firing, the element diffusion prevention layer is formed.

Another embodiment of firing the Zr-containing solid electrolyte layer and the Zr-free intermediate layer precursor is as follows. Firstly, green sheet B is pressed to be stacked on green sheet A containing Zr, and slurry D is applied onto the surface of green sheet A. The resultant stacked body is fired at fired at 1,180°C to 1,400°C, to thereby diffuse Zr contained in green sheet A to slurry D. After firing, the element diffusion prevention layer is formed.

(5) Formation of cathode layer

On the intermediate layer formed through firing, a coating layer for forming a cathode layer is provided. The coating layer is provided by applying, on the intermediate layer, a slurry containing a conductive ceramic micropowder for forming the cathode layer (e.g., LSCF micropowder), an organic binder, and a solvent. Subsequently, the stacked body having the coating layer is fired, to thereby form the cathode layer. Thus, a solid oxide fuel cell having a structure as shown in FIG. 1 is fabricated.

Next, an embodiment of the method of the present invention for producing a solid oxide fuel cell will be described.

The production method comprises:

a step of preparing a solid electrolyte layer precursor containing YSZ and an anode layer precursor;

a step of pressing the anode layer precursor to stack on the solid electrolyte layer precursor, to thereby produce a first stacked body;

a step of firing the first stacked body, to thereby produce a first fired body in which the anode layer is stacked on the solid electrolyte layer;

a step of stacking an intermediate layer precursor containing no Zr on the solid electrolyte layer of the first fired body, to thereby produce a second stacked body;

a step of firing the second stacked body, to thereby produce a second fired body in which the anode layer, the solid electrolyte layer, and the intermediate layer are stacked;

a step of stacking a cathode layer precursor on the intermediate layer of the second fired body, to thereby produce a third stacked body; and

a step of firing the third stacked body; wherein the second stacked body is fired at a temperature of 1,180°C or more to 1,400°C or less.

Through employment of such a production method, excessive grain growth in the element diffusion prevention layer can be suppressed, and the thickness of the element diffusion prevention layer can be sufficiently reduced. Thus, it is possible to produce a solid oxide fuel cell which realizes high power generation performance in an initial stage.

A fuel cell stack 11, which is an embodiment of the fuel stack of the present invention, will next be described.

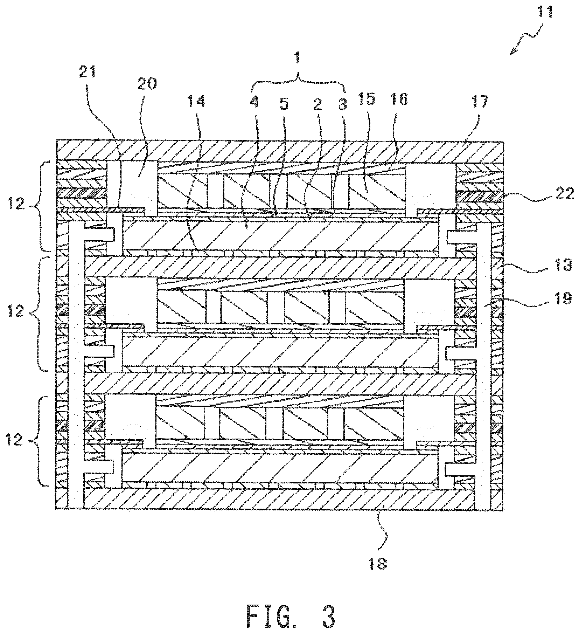

The fuel cell stack 11 is formed of a plurality of solid oxide fuel cells 1 which are electrically connected in series. FIGs. 2 and 3 show an example of the fuel cell stack 11. As shown in FIG. 2, a plurality of power generation layers 12, each including the solid oxide fuel cell 1 as a main part, are stacked in series (in the vertical direction in FIG. 2), with a metallic inter-cell separator 13 disposed between adjacent power generation layers 12. Thus, the fuel cell stack 11 is formed.

FIG. 3 is a vertical sectional view of the fuel cell stack 11 shown in FIG. 2. In each solid oxide fuel cell 1, the anode layer 4 is electrically connected to the inter-cell separator 13 (to a base 18 at the bottom of the cell stack) via an anode side collector 14. Each cathode layer 3 is electrically connected to a different inter-cell separator 13 (to a cover 17 at the top of the cell stack) via a cathode side collector 15 and a braze material 16.

Each power generation layer 12 has an isolation separator 21 for isolating a fuel gas flow path 19 from an air (oxidant gas) flow path 20. Adjacent power generation layers 12 are electrically insulated from each other by means of a frame 22 which is formed of an insulator (e.g., ceramic material) and which is disposed at a specific position in the stack direction.

The fuel cell stack 11, which can serve as a battery of high-voltage output, finds a variety of uses. One specific use of the fuel cell stack 11 is a solid oxide fuel battery in which the fuel cell stack is housed in a container. No particular limitation is imposed on the material and dimensions of the container, so long as the power generation performance of the battery is not impaired, and any known material and any dimensions may be used. The solid oxide fuel battery of the present invention may be employed as a power generation source in a small-scale, domestic cogeneration system, or in a large-scale, commercial cogeneration system.

Next will be described the action of the solid oxide fuel cell 1 of the present invention.

In one case, a solid oxide fuel battery having the solid oxide fuel cells 1 is provided. When the solid oxide fuel battery is put into operation, the solid oxide fuel battery is heated to a high temperature of 700 to 1,000°C. Under such high-temperature conditions, metallic elements such as Sr diffuse from the cathode layer 3 toward the solid electrolyte layer 2 in each cell. The thus-diffused metallic elements are trapped through reaction in the element diffusion prevention layer 6, whereby the metallic elements are prevented from reaching the solid electrolyte layer 2. Particularly, the element diffusion prevention layer of the solid oxide fuel cell 1 of the present invention exhibits a percent Sr coverage of 90% or less, even after a high-temperature (1,000°C), long-term (100 hr) accelerated heating test. In the case where percent Sr coverage reaches 100%, power generation performance of a fuel battery is considerably impaired. In contrast, when the element diffusion prevention layer includes 10% or more of regions which are not covered with Sr and which have favorable conductivity, such impairment in power generation performance can be avoided. Thus, according to the solid oxide fuel battery of the present invention, excessive rise in electrical resistance of the element diffusion prevention layer 6 can be prevented, even after long-term operation under general conditions. As a result, a drop in power generation performance of the fuel battery can be suppressed.

EXAMPLES

The present invention will next be described in more detail by way of examples, which should not be construed as limiting the invention thereto.

(Example 1)

(1) Preparation of green sheet for producing solid electrolyte layer

To a YSZ powder having a BET specific surface area of 5 to 7 $m^2/g$, there were added a butyral resin, dioctyl phthalate (DOP) serving as a plasticizer, a dispersant, and a toluene-ethanol mixture serving as a solvent, and the resultant mixture was kneaded by means of a ball mill, to thereby yield a slurry. The thus-obtained slurry was applied through a doctor blade technique, to thereby yield a green sheet for producing a solid electrolyte layer having a thickness of 10 $\mu$m.

(2) Preparation of green sheet for producing anode layer

An NiO powder having a BET specific surface area of 3 to 4 $m^2/g$ was weighed to a powder portion in an amount of 55 parts by mass (as reduced to Ni weight), and the powder portion was mixed with 45 parts by mass of a YSZ powder having a BET specific surface area of 5 to 7 $m^2/g$. To the resultant powder mixture, there were added a butyral resin, DOP serving as a plasticizer, a dispersant, and a toluene-ethanol mixture serving as a solvent, and the resultant mixture was kneaded by means of a ball mill, to thereby yield a slurry. The thus-obtained slurry was applied through the doctor blade technique, to thereby yield a green sheet for producing an anode active layer having a thickness of 10 $\mu$m.

(3) Stacking of solid electrolyte layer and anode layer

The green sheet for a solid electrolyte layer was bonded to the green sheet for anode layer. The stacked body was dried and fired at 1,400°C, to thereby form a solid electrolyte layer-anode layer stacked body.

(4) Preparation, printing, and firing of slurry for forming intermediate layer

An acrylic binder and isopropyl alcohol serving as a solvent were added to GDC powder, and the mixture was kneaded, to thereby prepare a slurry for producing an intermediate layer. The thus-prepared slurry was applied, through a screen printing technique, to the solid electrolyte side surface of the solid electrolyte layer-anode layer stacked body. After application of the slurry, the stacked body was fired at 1,180°C. In the course of firing, Zr contained in the solid electrolyte diffused toward the intermediate layer, whereby the element diffusion prevention layer was formed as a portion of the intermediate layer. The thickness of the element diffusion prevention layer formed through firing (hereinafter may be referred to as "initial element diffusion prevention layer thickness"), and the thickness of the intermediate layer were measured through the below-described procedure. The thickness of the element diffusion prevention layer was 200 nm, and that of the intermediate layer was 3 $\mu$m.

(5) Formation of cathode layer

$La_{0.6}Sr_{0.4}Co_{0.2}Fe_{0.8}O_3$ powder having an average particle size of 2 $\mu$m was mixed with isopropyl alcohol. The thus-prepared mixture liquid was sprayed onto the surface of the element diffusion prevention layer of the aforementioned stacked body, and the stacked body was fired at 1,100°C, to thereby form a cathode layer. Thus, a solid oxide fuel cell was fabricated.

(6) Accelerated heating test

The solid oxide fuel cell fabricated in (5) above was settled in an electric furnace, and the temperature inside the furnace was elevated from room temperature to 1,000°C at a temperature elevation rate of +4°C/min. The fuel cell was maintained at 1,000°C for 100 hours, and then the temperature inside the furnace was lowered to room temperature over 10 hours.

(7) Measurement of average particle diameter and thickness of element diffusion prevention layer after the accelerated heating test

After the accelerated heating test, the solid oxide fuel cell was processed by means of a focused ion beam (FIB) processor, with the ion beam being applied in a direction orthogonal to the layer stacking direction, to thereby provide measurement samples, each having a thickness of about 100 nm and including the solid electrolyte layer, the intermediate layer, and the cathode layer. Each measurement sample was irradiated with an electron beam of 200 kV by means of a transmission electron microscope, and a square area (3.5 $\mu$m $\times$ 3.5 $\mu$m) was selected so as to locate the intermediate layer at the center and include the interface between the solid electrolyte layer and the intermediate layer and the interface between the cathode layer and the intermediate layer, and the area was observed at a magnification of 30,000.

The average particle diameter of the element diffusion prevention layer was determined through the method disclosed by Nobuyasu MIZUTANI, Yoshiharu OZAKI, Toshio KIMURA, and Takashi MIZUTANI in "Ceramic Processing (Gihodo, published on March 25, 1985, p. 192 to 195)." Specifically, 10 or more straight lines parallel to the aforementioned interfaces were drawn in the element diffusion prevention layer, and the total length of the grains crossing each straight line was measured. The total lengths obtained by the drawn straight lines were averaged, to thereby obtain the average particle diameter.

Next, the thickness of the element diffusion prevention layer was determined. A straight line was drawn at the interface between the solid electrolyte layer and the intermediate layer, or at the interface between the cathode layer and the intermediate layer. Line analysis (3 $\mu$m) was carried out in a direction orthogonal to the straight line drawn at the interface, toward the intermediate layer. In the line analysis, the straight line orthogonal to the straight line drawn at the interface was drawn so as not to include any pores. The line analysis was performed 500 points at intervals of 6 nm with an analysis rate of 1 point/sec. As a result, a region where the Ce/Zr mole ratio fell within a range of 0.6 : 1 to 1 : 0.15 was evaluated as the element diffusion prevention layer. The thickness of the element diffusion prevention layer was found to 600 nm.

(8) Determination of percent Sr coverage

In a manner similar to that employed in (7) above, measurement samples were taken from the solid oxide fuel cell after the accelerated heating test, and each sample was observed under a transmission electron microscope with an electron beam at 200 kV. In each observed image, a square area (3.5 $\mu$m $\times$ 3.5 $\mu$m) was selected so as to locate the intermediate layer at the center and include the interface between the solid electrolyte layer and the intermediate layer and the interface between the cathode layer and the intermediate layer. Sr mapping was performed inside the square. Upon mapping, the maximum count was set to 15 counts. In the thus-obtained Sr map, a straight line was drawn at the interface between the solid electrolyte layer and the intermediate layer, and additional straight lines which were parallel to the straight line drawn at the interface were drawn at intervals of 200 nm, from the solid electrolyte layer toward the cathode layer. The total length of the regions in which Sr was present and which cross each of the additional lines was measured, and the ratio of Sr to the full length was calculated. Among the ratios determined at 11 drawn additional lines, the highest ratio was employed as percent Sr coverage. The percent Sr coverage was found to be 90%.

(9) Determination of percent deterioration

Before carrying out the accelerated heating test described in (6) above, the solid oxide fuel cell was operated, and the voltage ($V_1$) when a current density of 0.75 A/cm$^2$ was attained was measured. Also, after carrying out the accelerated heating test described in (6) above, the solid oxide fuel cell was operated, and the voltage ($V_2$) when a current density of 0.75 A/cm$^2$ was attained was measured. The voltage measurements $V_1$ and $V_2$ were input to the following equation, to thereby calculate percent deterioration.

$$(\text{Percent deterioration}) = (V_1 - V_2)/V_1 \times 100$$

Through calculation of percent deterioration, a drop in power generation of the solid oxide fuel cell, before and after the accelerated heating test, can be evaluated.

(Example 2)

The procedure of (4) preparation, printing, and firing of a slurry for forming the intermediate layer of Example 1 was repeated, except that firing was performed at 1,200°C, and the thickness of the intermediate layer and the thickness of the initial element diffusion prevention layer were controlled to 3 $\mu$m and 300 nm, respectively. The thickness of the element diffusion prevention layer, the average particle diameter of the element diffusion prevention layer, and percent Sr coverage were measured, and percent deterioration was calculated. Tables 1 and 2 show the results.

(Example 3)

The procedure of (4) preparation, printing, and firing of a slurry for forming the intermediate layer of Example 1 was repeated, except that firing was performed at 1,250°C, and the thickness of the intermediate layer and the thickness of the initial element diffusion prevention layer were controlled to 3 $\mu$m and 400 nm, respectively. The thickness of the element diffusion prevention layer, the average particle diameter of the element diffusion prevention layer, and percent Sr coverage were measured, and percent deterioration was calculated. Tables 1 and 2 show the results.

(Example 4)

The procedure of (4) preparation, printing, and firing of a slurry for forming the intermediate layer of Example 1 was repeated, except that firing was performed at 1,300°C, and the thickness of the intermediate layer and the thickness of the initial element diffusion prevention layer were controlled to 3 $\mu$m and 800 nm, respectively. The thickness of the element diffusion prevention layer, the average particle diameter of the element diffusion prevention layer, and percent Sr coverage were measured, and percent deterioration was calculated. Tables 1 and 2 show the results.

(Example 5)

The procedure of (4) preparation, printing, and firing of a slurry for forming the intermediate layer of Example 1 was repeated, except that firing was performed at 1,350°C, and the thickness of the intermediate layer and the thickness of the initial element diffusion prevention layer were controlled to 3 $\mu$m and 1,300 nm, respectively. The thickness of the element diffusion prevention layer, the average particle diameter of the element diffusion prevention layer, and percent Sr coverage were measured, and percent deterioration was calculated. Tables 1 and 2 show the results.

(Example 6)

The procedure of (4) preparation, printing, and firing of a slurry for forming the intermediate layer of Example 1 was repeated, except that firing was performed at 1,380°C, and the thickness of the intermediate layer and the thickness of the initial element diffusion prevention layer were controlled to 3 $\mu$m and 1,800 nm, respectively. The thickness of the element diffusion prevention layer, the average grain size of the element diffusion prevention layer, and percent Sr coverage were measured, and percent deterioration was calculated. Tables 1 and 2 show the results.

(Example 7)

The procedure of (4) preparation, printing, and firing of a slurry for forming the intermediate layer of Example 1 was repeated, except that firing was performed at 1,400°C, and the thickness of the intermediate layer and the thickness of the initial element diffusion prevention layer were controlled to 3 $\mu$m and 2,000 nm, respectively. The thickness of the element diffusion prevention layer, the average particle diameter of the element diffusion prevention layer, and percent Sr coverage were measured, and percent deterioration was calculated. Tables 1 and 2 show the results.

(Example 8)

The procedure of (4) preparation, printing, and firing of a slurry for forming the intermediate layer of Example 1 was repeated, except that firing was performed at 1,150°C, and the thickness of the intermediate layer and the thickness of the initial element diffusion prevention layer were controlled to 3 $\mu$m and 100 nm, respectively. The thickness of the element diffusion prevention layer, the average particle diameter of the element diffusion prevention layer, and percent Sr coverage were measured, and percent deterioration was calculated. Tables 1 and 2 show the results. Notably, since the cell IR resistance was considerably large after the accelerated heating test, the IR resistance could not be measured (denoted by "-" in Table 2). Also, percent deterioration could not be calculated (denoted by "-" in Table 2). However, in consideration that the cell IR resistance was considerably large after the accelerated heating test, percent deterioration was thought to be approximately 100%.

(Example 9)

The procedure of (4) preparation, printing, and firing of a slurry for forming the intermediate layer of Example 1 was repeated, except that firing was performed at 1,420°C, and the thickness of the intermediate layer and the thickness of the initial element diffusion prevention layer were controlled to 3 $\mu$m and 2,500 nm, respectively. The thickness of the element diffusion prevention layer, the average particle diameter of the element diffusion prevention layer, and percent Sr coverage were measured, and percent deterioration was calculated. Tables 1 and 2 show the results.

(Example 10)

The procedure of (4) preparation, printing, and firing of a slurry for forming the intermediate layer of Example 1 was repeated, except that firing was performed at 1,450°C, and the thickness of the intermediate layer and the thickness of the initial element diffusion prevention layer were controlled to 3 $\mu$m and 3,000 nm, respectively. The thickness of the element diffusion prevention layer, the average particle diameter of the element diffusion prevention layer, and percent Sr coverage were measured, and percent deterioration was calculated. Tables 1 and 2 show the results.

[Table 1]

| | A: Firing temp. for forming intermediate layer (°C) | Thickness of initial element diffusion prevention layer (nm) | B1: Thickness of element diffusion prevention layer after accelerated heating test (nm) | B2: Av. particle diameter of element diffusion prevention layer after accelerated heating test ($\mu$m) | C: Percent Sr coverage (%) |
|---|---|---|---|---|---|
| Ex. 1 | 1,180 | 200 | 600 | 0.5 | 90 |

(continued)

| | A: Firing temp. for forming intermediate layer (°C) | Thickness of initial element diffusion prevention layer (nm) | B1: Thickness of element diffusion prevention layer after accelerated heating test (nm) | B2: Av. particle diameter of element diffusion prevention layer after accelerated heating test ($\mu$m) | C: Percent Sr coverage (%) |
|---|---|---|---|---|---|
| Ex. 2 | 1,200 | 300 | 700 | 0.51 | 85 |
| Ex. 3 | 1,250 | 400 | 900 | 0.51 | 70 |
| Ex. 4 | 1,300 | 800 | 1,200 | 0.57 | 65 |
| Ex. 5 | 1,350 | 1,300 | 1,300 | 0.6 | 50 |
| Ex. 6 | 1,380 | 1,800 | 1,800 | 0.69 | 37 |
| Ex. 7 | 1,400 | 2,000 | 2,000 | 0.71 | 35 |
| Ex. 8 | 1,150 | 100 | 500 | 0.46 | 100 |
| Ex. 9 | 1,420 | 2,500 | 2,500 | 0.79 | 30 |
| Ex. 10 | 1,450 | 3,000 | 3,000 | 0.89 | 20 |

[Table 2]

| | E: Initial cell IR resistance ($\Omega cm^2$) | Cell IR resistance after accelerated heating test ($\Omega cm^2$) | D: Percent deterioration (%) |
|---|---|---|---|
| Ex. 1 | 0.12 | 0.14 | 9.5 |
| Ex. 2 | 0.125 | 0.145 | 7 |
| Ex. 3 | 0.13 | 0.155 | 3 |
| Ex. 4 | 0.15 | 0.17 | 1 |
| Ex. 5 | 0.175 | 0.175 | 0 |
| Ex. 6 | 0.2 | 0.2 | 0 |
| Ex. 7 | 0.21 | 0.21 | 0 |
| Ex. 8 | 0.115 | - | - |
| Ex. 9 | 0.235 | 0.235 | 0 |
| Ex. 10 | 0.26 | 0.26 | 0 |

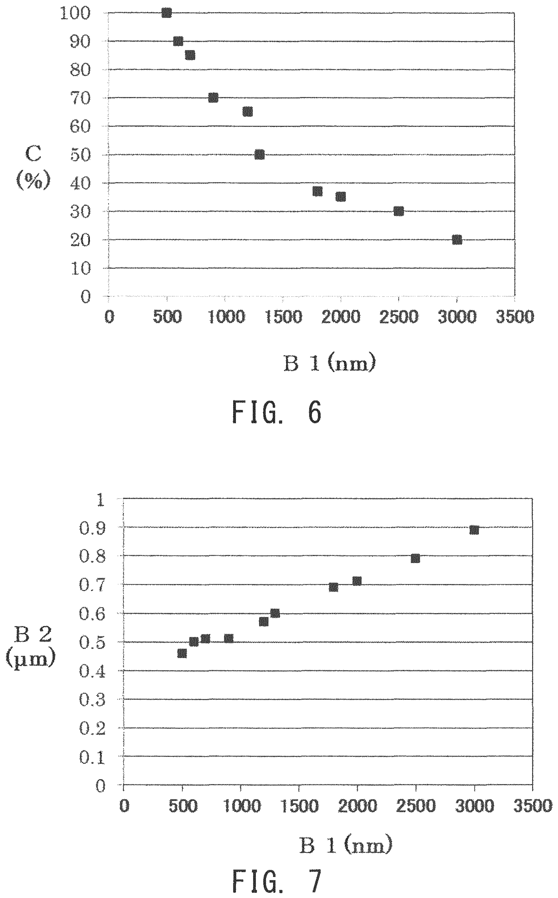

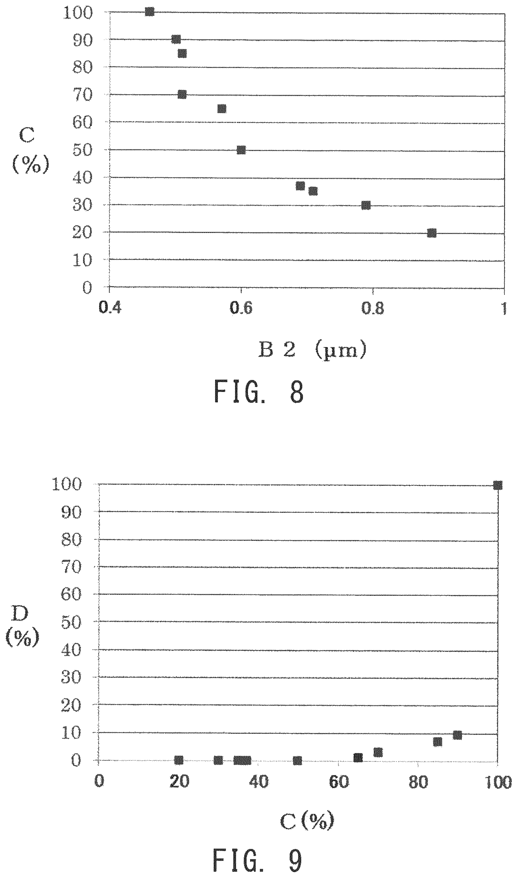

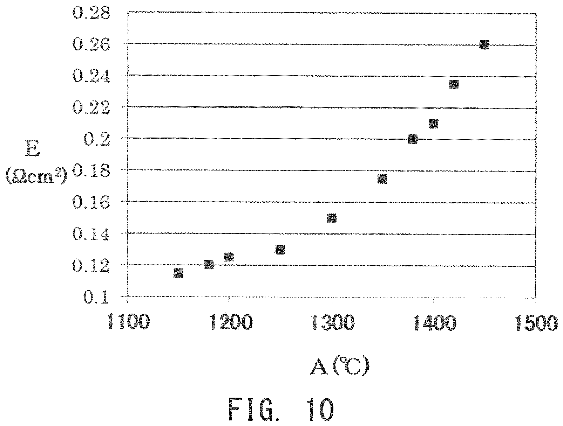

FIG. 5 is a graph plotting the thickness of the element diffusion prevention layer after the accelerated heating test with respect to the firing temperature for producing an intermediate layer (Exs. 1 to 10). FIG. 6 is a graph plotting the percent Sr coverage with respect to the thickness of the element diffusion prevention layer after the accelerated heating test (Exs. 1 to 10). FIG. 7 is a graph plotting the average particle diameter of the element diffusion prevention layer after the accelerated heating test with respect to the thickness of the element diffusion prevention layer after the accelerated heating test (Exs. 1 to 10). FIG. 8 is a graph plotting the percent Sr coverage with respect to the average particle diameter of the element diffusion prevention layer after the accelerated heating test (Exs. 1 to 10). FIG. 9 is a graph plotting the percent deterioration with respect to the percent Sr coverage (Exs. 1 to 10). FIG. 10 is a graph plotting the initial cell IR resistance with respect to the firing temperature for producing an intermediate layer (Exs. 1 to 10).

In each of FIGs. 5, 6, 7, 8, and 10, the points of plotting correspond to Examples 8, 1, 2, 3, 4, 5, 6, 7, 9, and 10, respectively, from the left in the graph. In FIG. 9, the points of plotting correspond to Examples 10, 9, 7, 6, 5, 4, 3, 2, 1, and 8, from the left in the graph.

The symbol "A" by the horizontal axis in FIG. 5 or 10 represents "the firing temperature for forming the intermediate layer." The symbol "B1" by the vertical axis in FIG. 5 or the horizontal axis in FIG. 6 or 7 represents "the thickness of the element diffusion prevention layer after the accelerated heating test." The symbol "B2" by the vertical axis in FIG. 7 or the horizontal axis in FIG. 8 represents "the average particle diameter of the element diffusion prevention layer after the accelerated heating test." The symbol "C" by the vertical axis in FIG. 6 or 8 or the horizontal axis in FIG. 9 represents "percent Sr coverage." The symbol "D" by the vertical axis in FIG. 9 represents "percent deterioration." The symbol "E" by the vertical axis in FIG. 10 represents "initial cell IR resistance."

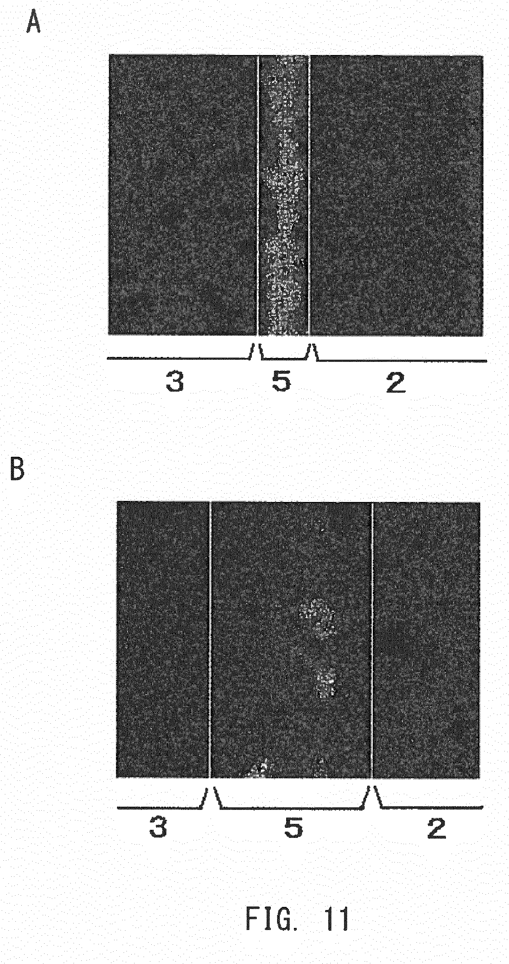

FIG. 11 shows transmission electron microscopic images of Sr mapping results determined between the solid electrolyte layer and the cathode layer (Examples 7 and 8). In the images, white dots represent points of Sr counting.

In Example 8, in which the thickness of the element diffusion prevention layer after the accelerated heating test is smaller than 600 nm, and the percent Sr coverage is greater than 90%, percent deterioration was 100%, indicating that the drop in power generation performance of the solid oxide fuel cell was considerable. In contrast, in Examples 1 to 7, in which the thickness of the element diffusion prevention layer after the accelerated heating test is 600 nm or more to 2,000 nm or less, and the percent Sr coverage is 90% or less, high power generation performance can be attained in an initial stage by virtue of a thin, high-resistance element diffusion prevention layer. Furthermore, since deterioration of the solid oxide fuel cell was suppressed to a percent deterioration of 10% or less, a drop in power generation performance of the solid oxide fuel cell can be effectively suppressed.

In Examples 9 and 10, in which the thickness of the element diffusion prevention layer after the accelerated heating test was greater than 2,000 nm, the initial cell IR resistance was large, indicating that the power generation performance in an initial stage was inferior to that of Examples 1 to 7.

The image of FIG. 11(a) (Example 8) shows that the intermediate layer 5 has a large Sr coverage ratio, whereas the image of FIG. 11(b) (Example 7) shows that the intermediate layer 5 has a small Sr coverage ratio.

Note that the aforementioned Examples 1 to 7 correspond to "Examples," and the Examples 8 to 10 correspond to "Comparative Examples."

DESCRIPTION OF REFERENCE NUMERALS

1: solid oxide fuel cell
2: solid electrolyte layer
3: cathode layer
4: anode layer
5: intermediate layer
6: element diffusion prevention layer
7: Zr-free layer
8, 28: interface
9: parallel straight line
10: high-resistance region
11: fuel cell stack
12: power generation layer
13: inter-cell separator
14: anode layer side collector
15: cathode layer side collector
16: braze material
17: cover
18: base
19: fuel gas flow path
20: oxidant gas flow path
21: isolation separator
22: frame

**Claims**

1. A solid oxide fuel cell (1) comprising

   a solid electrolyte layer (2),
   a cathode layer (3) which is formed on one surface of the solid electrolyte layer (2) and which contains at least Sr,
   an anode layer (4) which is formed on the other surface of the solid electrolyte layer (2), and
   an intermediate layer (5) formed between the solid electrolyte layer (2) and the cathode layer (3),wherein at least a part of the intermediate layer (5) is an element diffusion prevention layer (6);
   the element diffusion prevention layer (6) is formed of a complex oxide containing at least one rare earth element and Zr; wherein after the solid oxide fuel cell (1) has been subjected to an heating in air in an electric furnace from room temperature to 1,000°C at an temperature elevation rate of 4 °C/s and maintained at 1,000°C for 100 hr, the element diffusion prevention layer (6) has a thickness of 600 nm or more to 2,000 nm or less and an Sr coverage of 90% or lower, and has an average grain size of 0.5 $\mu$m or more to 0.71 $\mu$m or less.

2. A solid oxide fuel cell (1) according to claim 1, wherein said rare earth element contained in the element diffusion prevention layer (6) is at least one of Ce and Gd.

3. A solid oxide fuel cell (1) according to any one of claims 1 to 2, wherein
   the intermediate layer (5) contains GDC; and
   the element diffusion prevention layer (6) is disposed at an interface between the solid electrolyte layer (2) and the intermediate layer (5).

4. A solid oxide fuel cell (1) according to any one of claims 1 to 3, wherein
   the element diffusion prevention layer (6) contains YSZ and GDC; and
   the element diffusion prevention layer (6) has a ratio by mole of Ce to Zr (Ce/Zr mole ratio) of 0.6/1 or more to 1/0.15 or less.

5. A solid oxide fuel cell (1) according to claim 4, wherein
   the element diffusion prevention layer (6) has a high Zr mole ratio on the solid electrolyte layer (2) side and a high Ce mole ratio on the cathode layer (3) side.

6. A method for producing a solid oxide fuel cell (1) as recited in any one of claims 1 to 5, the method being **characterized by** comprising firing a solid electrolyte layer precursor simultaneously with an intermediate layer precursor containing Zr, to thereby form the element diffusion prevention layer (6).

7. A method for producing a solid oxide fuel cell (1) as recited in any one of claims 1 to 5, the method being **characterized by** comprising firing an intermediate layer precursor containing Zr at a temperature equal to or lower than the firing temperature of a solid electrolyte layer precursor, to thereby form the element diffusion prevention layer (6).

8. A method for producing a solid oxide fuel cell (1) as recited in any one of claims 1 to 5, the method being **characterized by** comprising firing a solid electrolyte layer (2) containing Zr or a precursor of the solid electrolyte layer, and an intermediate layer precursor containing no Zr, to thereby form the element diffusion prevention layer (6) through diffusion of Zr from the solid electrolyte layer (2) side to the intermediate layer (5) side.

9. A method for producing a solid oxide fuel cell (1) according to claim 8, wherein the intermediate layer precursor is fired at 1,180°C or more to 1,400°C or less.

10. A fuel cell stack (11) **characterized by** comprising a plurality of solid oxide fuel cells (1) as recited in any one of claims 1 to 5, which are electrically connected in series.

11. A solid oxide fuel battery, **characterized by** comprising a fuel cell stack (11) as recited in claim 10, which is housed in a container.

**Patentansprüche**

1. Festoxid-Brennstoffzelle (1), umfassend

eine Festelektrolytschicht (2),

eine Kathodenschicht (3), die auf der einen Oberfläche der Festelektrolytschicht (2) gebildet ist und die mindestens Sr enthält,

eine Anodenschicht (4), die auf der anderen Oberfläche der Festelektrolytschicht (2) ausgebildet ist, und

eine Zwischenschicht (5), die zwischen der Festelektrolytschicht (2) und der Kathodenschicht (3) gebildet ist, wobei mindestens ein Teil der Zwischenschicht (5) eine Elementdiffusionsschutzschicht (6) ist;

die Elementdiffusionsschutzschicht (6) aus einem komplexen Oxid gebildet ist, das mindestens ein Seltenerdelement und Zr enthält;

wobei, nachdem die Festoxid-Brennstoffzelle (1) einer Erwärmung in Luft in einem Elektroofen von Raumtemperatur auf 1.000°C bei einer Temperaturerhöhungsrate von 4 °C/s ausgesetzt wurde und 100 Stunden lang bei 1.000°C gehalten wurde, die Elementdiffusionsschutzschicht (6) eine Dicke von 600 nm oder mehr bis 2.000 nm oder weniger und eine Sr-Bedeckung von 90% oder weniger aufweist, und eine durchschnittliche Korngröße von 0,5 $\mu$m oder mehr bis 0,71 $\mu$m oder weniger aufweist.

2. Festoxid-Brennstoffzelle (1) nach Anspruch 1, wobei das in der Elementdiffusionsschutzschicht (6) enthaltene Seltenerdelement mindestens eines von Ce und Gd ist.

3. Festoxid-Brennstoffzelle (1) nach einem der Ansprüche 1 bis 2, wobei

die Zwischenschicht (5) GDC enthält; und

die Elementdiffusionsschutzschicht (6) an einer Schnittstelle zwischen der Festelektrolytschicht (2) und der Zwischenschicht (5) angeordnet ist.

4. Festoxid-Brennstoffzelle (1) nach einem der Ansprüche 1 bis 3, wobei

die Elementdiffusionsschutzschicht (6) YSZ und GDC enthält; und

die Elementdiffusionsschutzschicht (6) ein Molverhältnis von Ce zu Zr (Ce/Zr Molverhältnis) von 0,6/1 oder mehr bis 1/0,15 oder weniger aufweist.

5. Festoxid-Brennstoffzelle (1) nach Anspruch 4, wobei die Elementdiffusionsschutzschicht (6) ein hohes Zr-Molverhältnis auf der Seite der Festelektrolytschicht (2) und ein hohes Ce-Molverhältnis auf der Seite der Kathodenschicht (3) aufweist.

6. Verfahren zur Herstellung einer Festoxid-Brennstoffzelle (1) nach einem der Ansprüche 1 bis 5, **dadurch gekennzeichnet, dass** es das Brennen eines Festelektrolytschichtvorläufers gleichzeitig mit einem Zr enthaltenden Zwischenschichtvorläufer umfasst, um dadurch die Elementdiffusionsschutzschicht (6) zu bilden.

7. Verfahren zur Herstellung einer Festoxid-Brennstoffzelle (1) nach einem der Ansprüche 1 bis 5, **dadurch gekennzeichnet, dass** es das Brennen eines Zwischenschichtvorläufers, der Zr enthält, bei einer Temperatur gleich oder niedriger als die Brenntemperatur eines Festelektrolytschichtvorläufers umfasst, um dadurch die Elementdiffusionsschutzschicht (6) zu bilden.

8. Verfahren zur Herstellung einer Festoxid-Brennstoffzelle (1) nach einem der Ansprüche 1 bis 5, **dadurch gekennzeichnet, dass** es das Brennen einer Festelektrolytschicht (2), die Zr enthält oder eines Vorläufers der Festelektrolytschicht, und eines Zwischenschichtvorläufers, der kein Zr enthält, umfasst, um dadurch die Elementdiffusionsschutzschicht (6) durch Diffusion von Zr von der Festelektrolytschicht (2) Seite zur Zwischenschicht (5) Seite zu bilden.

9. Verfahren zur Herstellung einer Festoxid-Brennstoffzelle (1) nach Anspruch 8, worin der Zwischenschichtvorläufer bei 1.180°C oder mehr bis 1.400°C oder weniger gebrannt wird.

10. Brennstoffzellenstapel (11), **dadurch gekennzeichnet, dass** er eine Vielzahl von Festoxid-Brennstoffzellen (1) umfasst, wie sie in einem der Ansprüche 1 bis 5 aufgeführt sind, die elektrisch in Reihe geschaltet sind.

11. Festoxid-Brennstoffbatterie, **dadurch gekennzeichnet, dass** sie einen Brennstoffzellenstapel (11) nach Anspruch 10 umfasst, der in einem Behälter eingehaust ist.

**Revendications**

1. Pile à combustible à oxyde solide (1), comprenant :

   une couche d'électrolyte solide (2),
   une couche de cathode (3) qui est formée sur une surface de la couche d'électrolyte solide (2) et qui contient au moins du Sr,
   une couche d'anode (4) qui est formée sur l'autre surface de la couche d'électrolyte solide (2), et
   une couche intermédiaire (5) formée entre la couche d'électrolyte solide (2) et la couche de cathode (3), au moins une partie de la couche intermédiaire (5) étant une couche d'empêchement de diffusion d'élément (6) ;
   la couche d'empêchement de diffusion d'élément (6) est formée d'un oxyde complexe contenant au moins un élément terre rare et du Zr ; dans laquelle, après que la pile à combustible à oxyde solide (1) a été chauffée dans l'air dans un four électrique, passant de la température ambiante à 1 000°C avec un taux d'élévation de la température de 4°C/s, puis maintenue à 1 000°C pendant 100 h, la couche d'empêchement de diffusion d'élément (6) a une épaisseur comprise entre au moins 600 nm et au plus 2 000 nm et une couverture en Sr de 90% au plus, et elle présente une taille de grain moyenne comprise entre au moins 0,5 $\mu$m et au plus 0,71 $\mu$m.

2. Pile à combustible à oxyde solide (1) selon la revendication 1, dans laquelle ledit élément terre rare contenu dans la couche d'empêchement de diffusion d'élément (6) est au moins du Ce et/ou du Gd.

3. Pile à combustible à oxyde solide (1) selon l'une quelconque des revendications 1 à 2, dans laquelle
   la couche intermédiaire (5) contient du GDC ; et
   la couche d'empêchement de diffusion d'élément (6) est disposée au niveau d'une interface entre la couche d'électrolyte solide (2) et la couche intermédiaire (5).

4. Pile à combustible à oxyde solide (1) selon l'une quelconque des revendications 1 à 3, dans laquelle
   la couche d'empêchement de diffusion d'élément (6) contient de l'YSZ et du GDC ; et
   le rapport, en moles, de Ce à Zr (rapport molaire Ce/Zr) de la couche d'empêchement de diffusion d'élément (6) est compris entre au moins 0,6/1 et au plus 1/0,15.

5. Pile à combustible à oxyde solide (1) selon la revendication 4, dans laquelle
   la couche d'empêchement de diffusion d'élément (6) a un rapport molaire de Zr élevé du côté de la couche d'électrolyte solide (2) et un rapport molaire de Ce élevé du côté de la couche de cathode (3).

6. Procédé de fabrication d'une pile à combustible à oxyde solide (1) selon l'une quelconque des revendications 1 à 5, le procédé étant **caractérisé en ce qu'**il consiste à chauffer simultanément un précurseur de couche d'électrolyte solide et un précurseur de couche intermédiaire contenant du Zr, pour former ainsi la couche d'empêchement de diffusion d'élément (6).

7. Procédé de fabrication d'une pile à combustible à oxyde solide (1) selon l'une quelconque des revendications 1 à 5, le procédé étant **caractérisé en ce qu'**il consiste à chauffer un précurseur de couche intermédiaire contenant du Zr à une température inférieure ou égale à la température de chauffage d'un précurseur de couche d'électrolyte solide, pour former ainsi la couche d'empêchement de diffusion d'élément (6).

8. Procédé de fabrication d'une pile à combustible à oxyde solide (1) selon l'une quelconque des revendications 1 à 5, le procédé étant **caractérisé en ce qu'**il consiste à chauffer une couche d'électrolyte solide (2) contenant du Zr ou un précurseur de la couche d'électrolyte solide, et un précurseur de couche intermédiaire ne contenant pas de Zr, pour former ainsi la couche d'empêchement de diffusion d'élément (6) par diffusion de Zr du côté de la couche d'électrolyte solide (2) vers le côté de la couche intermédiaire (5).

9. Procédé de fabrication d'une pile à combustible à oxyde solide (1) selon la revendication 8, dans lequel le précurseur de couche intermédiaire est chauffé à une température comprise entre au moins 1 180°C et au plus 1 400°C.

10. Empilement de piles à combustible (11) **caractérisé en ce qu'**il comprend une pluralité de piles à combustible à oxyde solide (1) selon l'une quelconque des revendications 1 à 5 qui sont connectées électriquement en série.

11. Batterie à pile à combustible à oxyde solide, **caractérisée en ce qu'**elle comprend un empilement de piles à combustible (11) selon la revendication 10 qui est logé dans un contenant.

FIG. 1

FIG. 2

FIG. 3

FIG. 4

FIG. 5

FIG. 6

FIG. 7

FIG. 8

FIG. 9

FIG. 10

A

3     5     2

B

3     5     2

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010266925 A1
- JP 2002134132 A
- JP 2012212541 A

- EP 1528615 A2
- JP 2004303455 A

**Non-patent literature cited in the description**

- **NOBUYASU MIZUTANI ; YOSHIHARU OZAKI ; TOSHIO KIMURA ; TAKASHI MIZUTANI.** Ceramic Processing. Gihodo, 25 March 1985, 192-195